# EUROPÄISCHE PATENTANMELDUNG

(11) **EP 4 293 259 A1**
(43) Veröffentlichungstag der Anmeldung: **20.12.2023**
(21) Anmeldenummer: 22178941.5
(22) Anmeldetag: 14.06.2022
(51) Int. Cl.: F16K 31/122, F16K 39/02, B29C 49/42

(54) **VENTIL**

(71) Anmelder: Eugen Seitz AG, 8623 Wetzikon (CH)
(72) Erfinder: SCHMIDT, Joachim, 8442 Hettlingen (CH); KÖHLE, Stefan, 8620 Wetzikon (CH); SCHNETZER, Roland, 8274 Tägerwilen (CH); FEHLMANN, Mathias, 8330 Pfäffikon (CH)
(74) Vertreter: Clerc, Natalia

(57) **Zusammenfassung**

Ein Ventil, insbesondere einer Extrusionsblas- oder einer Streckblasmaschine zur Herstellung von Hohlkörpern, weist einen bewegbaren Kolben (2), einen Prozessfluidbereich (70) und einen Kompensationsraum (71) auf. Der Kolben (2) weist eine dem Prozessfluidbereich (70) zugewandte freie Stirnfläche (20) auf mit einem umlaufenden äusseren Dichtungsbereich (21). Mindestens ein Verbindungskanal (25) verbindet den Prozessfluidbereich (70) mit dem Kompensationsraum (71). Die freie Stirnfläche (20) des Kolbens (2) weist eine Erhöhung (204) auf, die vom äusseren Dichtungsbereich (21) umgeben ist. Die Erhöhung (204) überragt den äusseren umlaufenden Dichtungsbereich (21). Das Ventil ermöglicht ein schnelles und zeitpräzises Öffnen.

## Beschreibung

### TECHNISCHES GEBIET

Die vorliegende Erfindung betrifft ein Ventil, insbesondere zum pneumatischen Schalten in einem Blasformprozess. Das Ventil eignet sich insbesondere zur Verwendung in einer Extrusionsblas- oder einer Streckblasmaschine zur Fertigung von Hohlkörpern aus Kunststoff.

### STAND DER TECHNIK

Blaseinrichtungen bzw. Blasmaschinen dienen der Formung von Hohlkörpern, insbesondere zur Herstellung von Kunststoff-Flaschen aus PP (Polypropylen) oder PET (Polyethylenterephthalat). Üblicherweise wird ein vortemperierter Vorformling mit einer Blasdüse der Blasmaschine verbunden. Durch Einblasen eines Prozessgases, vorzugsweise Druckluft, wird er geweitet. Durch Verwendung von Blasformen lässt sich die gewünschte Form erzielen.

Die Herstellung bzw. Formung derartiger Hohlkörper mittels Blasmaschinen erfolgt innerhalb weniger Sekunden, vorzugsweise innerhalb von 1 bis 3 s, wobei das Einblasen des Prozessgases über zwei oder mehrere Stufen erfolgt. Die einzelnen Blasschritte wie auch das Entlüften werden mittels Ventilen gesteuert. An diese Ventile werden deshalb hohe Anforderungen gesetzt. Sie müssen möglichst präzise und schnell schalten können. Ihre Ansprechzeiten müssen möglichst kurz sein. Ferner ist eine hohe Anzahl an Schaltzyklen und somit eine hohe Lebensdauer gewünscht. Bewährt haben sich pneumatisch vorgesteuerte Ventile. Diese Ventile weisen ein Hauptventil mit einem pneumatisch betätigten Kolben auf. Das entsprechende Steuergas, üblicherweise Steuerluft, wird mittels zwei Pilotventilen gesteuert. Die Pilotventile sind üblicherweise Solenoidventile, d.h. Magnetventile.

Hohlkörper, insbesondere Flaschen, werden vermehrt mit relativ dünnen Wänden hergestellt. Zudem wird vermehrt Recycling-PET verwendet, welches Material-Inhomogenität aufweisen kann. Beides erfordert zeitlich sehr präzis und schnell schaltende Ventile, die insbesondere einen steilen Druckanstieg beim Öffnen des Ventils ermöglichen. Hohe Strömungskräfte beim Öffnen und/oder beim Schliessen des Ventils können zudem das Verhalten des Ventils negativ beeinflussen.

EP 1 574 771 A2, EP 2 142 830 B1, EP 3 530 431 A1 offenbaren vorgesteuerte Ventile, die sich prozessdruckunabhängig mittels des Steuerdrucks öffnen und schliessen lassen. WO 2019/105783 A1 zeigt ebenfalls ein Ventil mit einem druckausgeglichenen Kolben, wobei der Kolben eine umlaufende, zu einer weichen und/oder elastischen Sitzdichtung hin ragende Dichtungskrone aufweist. Die Dichtungskrone weist eine spitz zulaufende Dichtungskante auf.

Ventile mit druckausgeglichenen Kolben ermöglichen sehr kurze und präzise Schaltzeiten. Aufgrund ihrer minimierten Steuerflächen lassen sich zwar schnelle Reaktionszeiten erzielen. Nachteilig ist jedoch, dass ihre kleinen Steuerflächen geringe Antriebskräfte ergeben, wodurch der Kolben sensibel auf externe Einflüsse reagiert.

FR 3 056 670 A1 zeigt ferner ein hydraulisches Ventil für Verbrennungsmotoren, mit einem Einlass und einem Auslass, die sich radial zum Ventilkolben erstrecken. Ausgangsseitig ist unterhalb des Kolbens eine nach oben ragende Nase mit einer Spiralfeder angeordnet, die zur Öffnung des Ventils dient.

### DARSTELLUNG DER ERFINDUNG

Es ist deshalb eine Aufgabe der Erfindung, ein Ventil zu schaffen, das ein schnelles und zeitlich präzises Öffnen ermöglicht.

Diese Aufgabe löst ein Ventil mit den Merkmalen des Patentanspruchs 1.

Das erfindungsgemässe Ventil weist einen bewegbaren Kolben, einen Prozessfluidbereich und einen Kompensationsraum auf. Der Kolben weist eine dem Prozessfluidbereich zugewandte freie Stirnfläche mit einem umlaufenden äusseren Dichtungsbereich auf. Der Kolben weist ferner mindestens einen Verbindungskanal auf, der den Prozessfluidbereich mit dem Kompensationsraum verbindet. Erfindungsgemäss weist die freie Stirnfläche des Kolbens eine Erhöhung auf, die vom äusseren Dichtungsbereich umgeben ist, wobei die Erhöhung den umlaufenden äusseren Dichtungsbereich überragt.

Das Prozessfluid ist üblicherweise Druckluft.

Das erfindungsgemässe Ventil ist mit einer Stirnfläche versehen, die anstelle der üblicherweise flachen Ausbildung eine Erhebung aufweist. Das Ventil weist dadurch eine strömungsoptimierte Kolbengeometrie auf. Dank der Erhebung lassen sich externe Einflüsse besser kompensieren. Das Ventil ist somit weniger anfällig auf externe Einflüsse.

Die Erhebung führt beim Öffnen des Ventils zu einer Strömungsumlenkung des Prozessfluids. Dadurch wird der Druckausgleich im Bereich des mindestens einen Verbindungskanals derart beeinflusst, dass in diesem Bereich ein Unterdruck entsteht, der eine Kraft in Öffnungsrichtung des Kolbens auf den Kolben ausübt. Diese Öffnungstendenz wird noch erhöht durch die Druckbeeinflussung im Kompensationsraum, die durch den Verbindungskanal ermöglicht ist. Diese durch die Strömungsumlenkung und die Druckbeeinflussung entstehenden Kräfte weisen eine Grösse auf, die eine Kraft kompensieren, die beim Öffnen des Ventils durch den Bernoulli-Effekt an Kanten des Ventils entsteht und die den Kolben in Schliessrichtung zieht. Der Bernoulli-Effekt tritt insbesondere im Dichtungsbereich auf. Die durch die Strömungsumlenkung und die Druckbeeinflussung entstehenden Kräfte kompensieren vorzugsweise mindestens die durch den Bernoulli-Effekt bedingte Kraft.

Durch Wahl der Höhe der Erhebung und/oder durch Wahl der Form der Erhebung, insbesondere der Neigung und Form ihres Mantels, lässt sich die Grösse der einander entgegenwirkenden Kräfte beeinflussen.

Vorzugsweise ist das Ventil derart gestaltet, dass diese drei Effekte, d.h. doppelte Öffnungstendenz und einfache Schliesstendenz, ausbalanciert sind. Dies ermöglicht zusätzlich zum schnellen und zeitpräzisen Öffnen auch ein möglichst schnelles Schliessen des Ventils.

In bevorzugten Ausführungsbeispielen ist deshalb die Höhe und/oder die Form der Erhebung derart gewählt, dass die in Öffnungsrichtung wirkenden Kräfte annähernd oder genau gleich gross sind wie die in Schliessrichtung wirkende, vom Bernoulli-Effekt hervorgerufene Kraft. Dadurch ist nicht nur ein schnelles und zeitlich präzises Öffnungsverhalten ermöglicht, sondern es ist auch sichergestellt, dass sich das Ventil bei grosser Strömung des Fluidprozessgases zuverlässig schliessen lässt. Dies insbesondere dann, wenn das Prozessfluid nicht wegströmen kann, wie es beispielsweise bei einer geplatzten Flasche oder bei einem Fehlen eines Rohlings vorkommen kann.

Das Ventil ist vorzugsweise ein Blasventil einer Blasmaschine, beispielsweise ein Hauptblasventil oder ein Vorblasventil.

Das erfindungsgemässe Ventil ermöglicht ein schnelles und zeitlich präzises Öffnen. Die Produktivität einer Blasmaschine lässt sich dadurch erhöhen. Der Output der blasgeformten Flaschen lässt sich vergrössern. Die CO₂ Bilanz wird somit verbessert, da mit derselben Infrastruktur mehr Flaschen produziert werden.

Das erfindungsgemässe Ventil ermöglicht durch seine verbesserte Präzision eine erhöhte Verwendung von Recycling-PET, welches Material-Inhomogenitäten aufweist und dadurch ein engeres Produktionsprozessfenster benötigt. Die CO₂ Bilanz bzw. die Ökobilanz ist dadurch gesteigert, da weniger Neumaterial benötigt wird.

Zudem lassen sich Flaschen dünnwandiger ausbilden, was wiederum Material einspart und die CO₂ Bilanz verbessert.

Das Prozessfluid, üblicherweise Blasluft, lässt sich in einem höheren Masse zurückgewinnen, was wiederum einen positiven Effekt auf die CO₂ Bilanz hat.

Der mindestens eine Verbindungskanal ist vorzugsweise im Bereich der Erhöhung angeordnet. Vorzugsweise durchsetzt der mindestens eine Verbindungskanal die Erhöhung. Dies optimiert die Strömungsumlenkung und verbessert somit das Öffnungsverhalten des Ventils.

Vorzugsweise bildet der äussere umlaufende Dichtungsbereich eine Dichtungskrone. Die Dichtungskrone weist vorzugsweise eine umlaufende Dichtungskante auf. Dadurch ist die Dichtfläche minimiert. Es lassen sich minimale Steuerflächen verwenden. Vorzugsweise ist eine Dichtungskrone und eine Sitzdichtung vorhanden, wie sie in WO 2019/105783 A1 beschrieben sind.

Vorzugsweise ist die Erhöhung mittig im äusseren umlaufenden Dichtungsbereich angeordnet. Dadurch ist die Strömungsumlenkung auch bei sich drehendem Kolben optimiert.

Die Erhebung lässt sich unterschiedlich ausbilden. Vorzugsweise ist ihre Mantelfläche rotationssymmetrisch ausgebildet. Die Erhebung lässt sich beispielsweise kegelstumpfförmig mit einem geradlinigen Mantel ausbilden, vorzugsweise in der Form eines geraden Kegelstumpfs. Vorzugsweise ist sie jedoch ein Kegelstumpf mit einem konkav gebogenen bzw. nach innen gebogenen Mantel, wobei auch hier die Form des geraden Kegelstumpfs bevorzugt ist.

Die prozessfluidseitige Einlassöffnung des mindestens einen Verbindungskanals lässt sich an unterschiedlichen Orten anordnen. Beispielsweise kann sie in der Flanke der Erhebung angeordnet sein. Vorzugsweise ist sie jedoch mittig in der Erhöhung angeordnet.

Das Ventil lässt sich auf unterschiedliche Art und Weise betätigen. Vorzugsweise ist das Ventil pilotventil-gesteuert. Der Kolben wird dabei mittels eines ersten Steuerdrucks und eines zweiten Steuerdrucks betätigt, wobei er hierzu eine erste Steuerfläche zur Beaufschlagung mit dem ersten Steuerdruck und eine zweite Steuerfläche zur Beaufschlagung mit dem zweiten Steuerdruck aufweist. Vorzugsweise ist der Kolben bezüglich des Prozessdrucks druckausgeglichen, so dass sich das Ventil lediglich mittels der Steuerdrücke betätigen lässt. Je nach Ausführungsform wird ein erster Steuerdruck zum Schliessen des Ventils und ein zweiter Steuerdruck zum Öffnen des Ventils verwendet, wobei jeder Steuerdruck von einem separaten Pilotventil gesteuert wird. In anderen Ausführungsformen ist der erste Steuerdruck zeitlich konstant und dient als Luftfeder und der zweite Steuerdruck wird variiert. Ein derartiges Ventil ist in der noch unveröffentlichten EP 21 171 205.4 der Anmelderin beschrieben.

In bevorzugten Ausführungsformen weist das Ventil eine Prozessfluid-Eingangsöffnung auf, die in den Prozessfluidbereich hineinführt, und eine Prozessfluid-Ausgangsöffnung, die aus dem Prozessfluidbereich hinausführt. Dabei sind die Prozessfluid-Eingangsöffnung und die Prozessfluid-Ausgangsöffnung annähernd in einem rechten Winkel zueinander angeordnet.

Vorzugsweise ist die Prozessfluid-Eingangsöffnung annähernd parallel zu einer Längsachse des Kolbens angeordnet und die Prozessfluid-Ausgangsöffnung ist annähernd senkrecht zur Längsachse des Kolbens angeordnet. Dadurch entstehen dank der Strömung des Prozessfluids Kräfte auf den Kolben, die sich mittels der erfindungsgemässen Ausbildung des Ventils optimal kompensieren. Die Längsachse ist durch die Verschiebebewegungen des Kolbens beim Öffnen und Schliessen des Kolbens definiert.

Der Kolben definiert vorzugsweise eine Längsmittelachse. In bevorzugten Ausführungsformen verläuft diese Längsmittelachse im mindestens einen Verbindungskanal, d.h. der Verbindungskanal ist mittig angeordnet und verläuft parallel zur Längsachse des Kolbens und somit zur Haupt-Bewegungsrichtung des Kolbens beim Öffnen und Schliessen. Der Kolben ist dadurch optimal ausgewogen.

In anderen bevorzugten Ausführungsformen sind mindestens zwei Verbindungskanäle vorhanden, wobei die mindestens zwei Verbindungskanäle in einem Winkel ungleich 0° zur Längsmittelachse verlaufen. Vorzugsweise sind zwei, drei oder vier gleichmässig über den Umfang des Kolbens verteilt angeordnete Verbindungskanäle vorhanden.

Vorzugsweise weist die freie Stirnfläche zwischen der Erhebung und dem umlaufenden Dichtungsbereich eine umlaufende Fläche auf, die senkrecht zur Längsmittelachse verläuft. Die Fläche ist vorzugsweise plan ausgebildet. D.h. die Erhebung endet in einem Plateau, in dem vorzugsweise die Einlassöffnung des Verbindungskanals angeordnet ist.

Vorzugsweise ist eine dem Dichtungsbereich gegenüberliegende Sitzdichtung plan ausgebildet und sie verläuft senkrecht zur Längsmittelachse des Kolbens. Dies optimiert den Strömungsverlauf im Bereich der Dichtungskante bzw. des Dichtungsbereichs und lenkt die Strömung zur Flanke, d.h. zum Mantel, der Erhebung hin. Des Weiteren ist dadurch die Dichtung optimiert.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: einen Längsschnitt durch ein Ventil in einer ersten Ausführungsform in offener Position;
- Figur 2: das Ventil gemäss Figur 1 in geschlossener Position;
- Figur 3: einen Längsschnitt durch ein Ventil in einer zweiten Ausführungsform in offener Position und
- Figur 4: das Ventil gemäss Figur 3 in geschlossener Position.

### BESCHREIBUNG BEVORZUGTER AUSFÜHRUNGSFORMEN

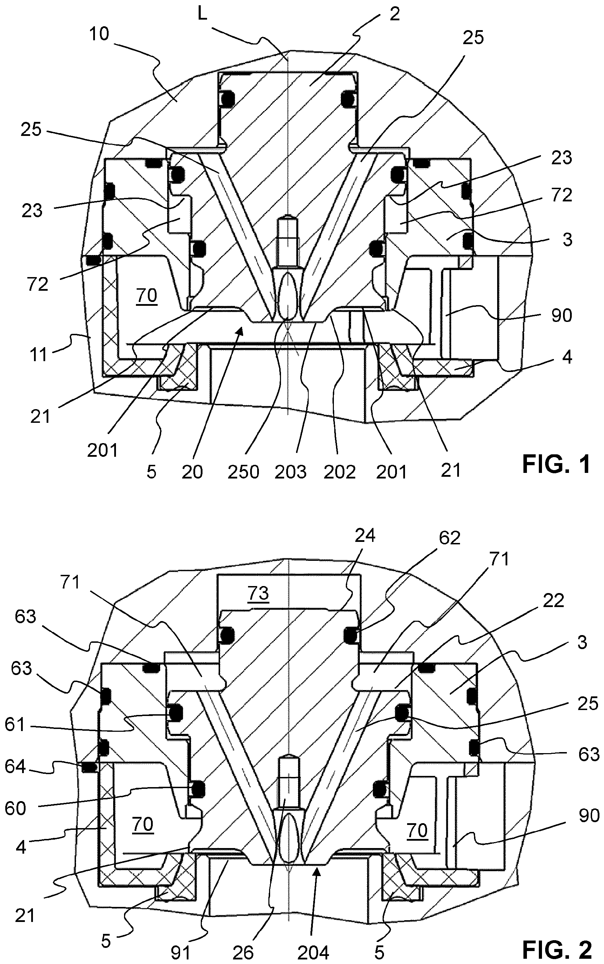

Die Figuren 1 und 2 zeigen ein erstes Ausführungsbeispiel eines erfindungsgemässen Ventils. Es ist vorzugsweise ein Prozessventil einer Blasmaschine, beispielsweise ein Hauptblasventil oder ein Vorblasventil.

Das Ventil weist einen Kolben 2 und eine Kolbenaufnahme auf, in welcher der Kolben 2 bewegbar gehalten ist. Die Kolbenaufnahme ist je nach Ausführungsform unterschiedlich ausgebildet. Sie ist beispielsweise durch ein eigenes ein- oder mehrteiliges Gehäuse gebildet. In anderen Ausführungsformen ist sie Teil eines Steuerblocks einer Blasmaschine. In weiteren Ausführungsformen ist sie beispielsweise Teil eines Steuerblocks und eines Deckels, wobei sie noch weitere Bauteile umfasst oder nur aus diesen zwei Bauteilen besteht.

Im hier dargestellten Beispiel ist die Kolbenaufnahme durch ein erstes Gehäuseteil 10, ein zweites Gehäuseteil 11 und eine Führungsschürze 3 gebildet. Die zwei Gehäuseteile 10, 11 bilden einen Hohlraum, in welchem die Führungsschürze 3 ortsfest angeordnet ist. Die Führungsschürze 3 umgibt den Kolben 2, der relativ zur Führungsschürze 3 und somit zu den zwei Gehäuseteilen 10, 11 entlang einer Längsmittelachse L des Kolbens 2 verschiebbar ist.

Das erste und zweite Gehäuseteil 10, 11 sind vorzugsweise als massive Bauteile ausgebildet, die, wo notwendig, mit Ausnehmungen, Bohrungen und Kanälen versehen sind. Im Hohlraum, der durch das erste Gehäuseteil 10 und das zweite Gehäuseteil 11 gebildet ist und in dem sich das Ventil befindet, sind Räume vorhanden, wie beispielsweise ein Prozessfluidbereich 70, ein Kompensationsraum 71, ein erster Steuerraum 72 und ein zweiter Steuerraum 73.

Dichtungen, vorzugsweise Dichtungsringe oder Dichtungsring-Paare, dichten die Führungsschürze 3 und den Kolben 2 gegenüber den Gehäuseteilen 10, 11 und den Kolben 2 gegenüber der Führungsschürze 3 ab.

Eine dieser Dichtungen bildet eine dynamische Dichtung 60, die zwischen dem bewegbaren Kolben 2 und der Führungsschürze 3 angeordnet ist und eine Dichtung gegenüber dem Prozessfluidbereich 70 bildet.

Die Dichtungen umfassen ferner einen ersten Dichtungsring 61, der ebenfalls zwischen dem Kolben 2 und der Führungsschürze 3 angeordnet ist und den Kompensationsraum 71 gegenüber dem ersten Steuerraum 72 dichtet. Ein zweiter Dichtungsring 62 ist zwischen dem Kolben 2 und dem ersten Gehäuseteil 10 angeordnet und dichtet den Kompensationsraum 71 gegenüber dem zweiten Steuerraum 73. Dritte Dichtungsringe 63 sind statische Dichtungen, die zwischen der Führungsschürze 3 und dem ersten Gehäuseteil 10 angeordnet sind. Mindestens ein vierter Dichtungsring 64 befindet sich zwischen dem ersten Gehäuseteil 10 und dem zweiten Gehäuseteil 11 und dichtet das Ventil gegenüber der Umgebung ab.

Der Kolben 2 öffnet und verschliesst eine Verbindung zwischen einer Prozessfluid-Eingangsöffnung 90 und einer zur Blasdüse der Blasmaschine führenden Prozessfluid-Ausgangsöffnung 91. Eine hier nicht dargestellte Prozessdruckquelle führt das Prozessfluid durch die Prozessfluid-Eingangsöffnung 90 zu, wobei das Prozessfluid durch die Prozessfluid-Ausgangsöffnung 91 in den hier ebenfalls nicht dargestellten Rohling des Hohlkörpers geführt ist. Zwischen Prozessfluid-Eingangsöffnung 90 und der Prozessfluid-Ausgangsöffnung 91 liegt der Prozessfluidbereich 70.

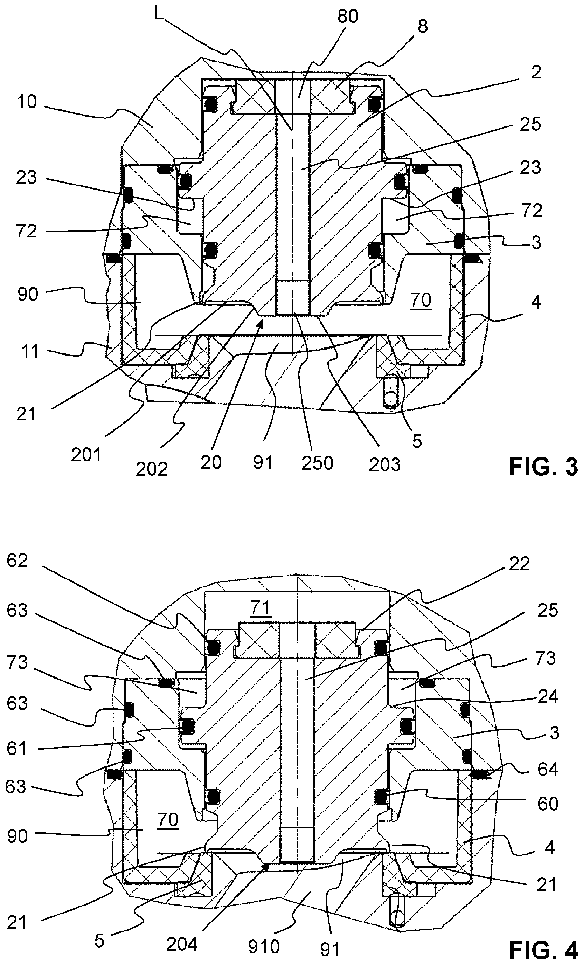

Die Prozessfluid-Eingangsöffnung 90 ist vorzugsweise radial zum Kolben 2 angeordnet. Ihre Öffnungsfläche verläuft somit vorzugsweise parallel zur Längsmittelachse L des Kolbens 2. Die Prozessfluid-Ausgangsöffnung 91 ist vorzugsweise axial zum Kolben 2 angeordnet. Ihre Öffnungsfläche verläuft vorzugsweise senkrecht zur einer Längsmittelachse L des Kolbens 2. Der in Strömungsrichtung nachfolgende Prozessfluid-Ausgangskanal 910 verläuft in diesem Beispiel ebenfalls parallel zur Längsmittelachse L und somit zur Bewegungsrichtung des Kolbens 2. Er kann jedoch alternativ, wie beispielsweise in Beispiel gemäss den Figuren 3 und 4 dargestellt ist, in einem spitzen Winkel zur Längsmittelachse L verlaufen.

Die Führungsschürze 3 weist im Wesentlichen einen zylinderförmigen Grundkörper auf, der auf seiner Aussenseite in einen kegelstumpfförmigen Abschnitt übergeht. Der innere Durchmesser der Führungsschürze 3 ist im Wesentlichen zylinderförmig, wobei er eine umlaufende Stufe aufweist. Die Führungsschürze 3 ist vorzugsweise aus einem steifen Material gebildet, vorzugsweise aus Metall. In Figur 2 ist das Ventil im geschlossenen Zustand dargestellt. Der Kolben 2 überragt das freie konische Ende der Führungsschürze 3 vorzugsweise bereits im offenen Zustand des Ventils.

Die Führungsschürze 3 ist vorzugsweise mittels den hier nicht dargestellten Befestigungsschrauben am ersten Gehäuseteil 10 befestigt, wobei sie dadurch auch den Kolben 2 im ersten Gehäuseteil 10 hält. Der Kolben 2 ist während des Schliessens und Öffnens des Ventils in der Führungsschürze 3 geführt.

Im zweiten Gehäuseteil 11 ist eine Sitzdichtung 5 angeordnet. Sie ist vorzugsweise aus einem weichen, elastischen Ringkörper gebildet. Die Sitzdichtung 5 ist vorzugsweise, wie hier dargestellt, mittels eines Niederhalters 4 in einer Ausnehmung des zweiten Gehäuseteils 11 fixiert gehalten. Der Niederhalter 4 ist vorzugsweise ein Ringkörper aus einem steifen Material. Er ist vorzugsweise mittels des ersten Gehäuseteils 10 eingeklemmt und in seiner Position fixiert. Alternativ oder zusätzlich ist er mittels anderen Befestigungsmitteln am zweiten Gehäuseteil 11 fixiert. Beispielsweise ist er direkt am zweiten Gehäuseteil 11 angeschraubt. Der Niederhalter 4 weist vorzugsweise die Prozessfluid-Eingangsöffnung 90 auf.

Der Kolben 2 weist eine dem Prozessfluid und somit dem Prozessfluidraum 70 zugewandte freie Stirnfläche 20 mit einem Dichtungsbereich 21 auf. In geschlossener Stellung liegt dieser Dichtungsbereich 21 auf der Sitzdichtung 5 auf und verschliesst somit die Verbindung zwischen der Prozessfluid-Eingangsöffnung 90 und der Prozessfluid-Ausgangsöffnung 91. Dies ist in Figur 2 dargestellt.

Der Dichtungsbereich 21 ist vorzugsweise in Form einer spitz zulaufenden, umlaufenden Dichtungskrone ausgebildet, vorzugsweise wie sie in WO 2019/105783 A1 beschrieben ist. Der Dichtungsbereich 21, hier die Dichtungskrone, verläuft vorzugsweise in der äussersten Peripherie der freien Stirnseite 20 des Kolbens 2. Vorzugsweise weist der Dichtungsbereich 21, hier die Dichtungskrone, genau oder annähernd denselben Durchmesser auf wie die dynamische Dichtung 60.

Der Kolben 2 weist vorzugsweise eine relativ einfache Form auf. Er ist vorzugsweise im Wesentlichen kreiszylinderförmig ausgebildet, wobei er sich aus drei oder mehr Zylinderabschnitten mit unterschiedlichen Durchmessern zusammensetzt.

Der Kolben 2 ist von Verbindungskanälen 25 durchsetzt, die den Prozessfluidbereich 70 mit dem Kompensationsraum 71 verbinden.

Vorzugsweise sind in dieser Ausführungsform zwei, drei oder vier Verbindungskanäle 25 gleichmässig verteilt im Kolben 2 angeordnet. Sie verlaufen in diesem Beispiel schräg zu einer Längsmittelachse L, wobei sie mittig in der freien Stirnfläche 20 in eine gemeinsame Einlassöffnung 250 münden.

Die Einlassöffnung verlängert sich vorzugsweise in eine Bohrung 26 mit einem Gewinde. Diese Bohrung dient zum vereinfachten Herausziehen des Kolbens 2 mittels eines in die Bohrung 26 einführbaren, hier nicht dargestellten Schraube.

Der Kolben 2 weist eine Kompensationsfläche 22 auf, die der freien Stirnfläche 20 abgewandt ist und sich im Kompensationsraum 71 befindet. Die Verbindungskanäle 25 enden in der Kompensationsfläche 22.

Die Kompensationsfläche 22 ist in diesem Beispiel auf dem Zylinderabschnitt des Kolbens 2 mit dem grössten Aussendurchmesser ausgebildet. Die Kompensationsfläche 22 ist in diesem Beispiel ringförmig ausgebildet. Der Kompensationsraum 71 ist in diesem Beispiel somit ringförmig ausgebildet und befindet sich, wie in den Figuren 1 und 2 erkennbar ist, oberhalb des ersten Steuerraums 72, der ebenfalls ringförmig ausgebildet ist.

Der erste Steuerraum 72 weist eine ringförmige erste Steuerfläche 23 auf, die gleich ausgerichtet ist wie die freie Stirnfläche 20, d.h. zur Prozessfluid-Seite hingewandt ist.

Der zweite Steuerraum 73 befindet sich in diesem Beispiel am oberen Ende des Kolbens 2, d.h. an dem prozessfluid-abgewandten Ende. Er ist in diesem Beispiel kreisförmig. Die freie obere Stirnfläche des Kolbens 2 bildet eine kreisförmige zweite Steuerfläche 24, die in die der ersten Steuerfläche 23 entgegengesetzte Richtung weist.

Die freie Stirnfläche 20 und die Kompensationsfläche 22 weisen vorzugsweise eine gleich grosse Fläche auf, so dass der Kolben 2 bezüglich des Prozessdrucks druckausgeglichen ist.

Die erste Steuerfläche 23 und die zweite Steuerfläche 24 weisen vorzugsweise ebenfalls eine gleich grosse Fläche auf. Somit ist der Kolben 2 auch bezüglich diesen zwei Flächen druckausgeglichen. Die Steuerflächen 23, 24 weisen jedoch vorzugsweise ein anderes Flächenmass auf als die freie Stirnfläche 20 und die Kompensationsfläche 22.

Der Kolben 2 ist pilotventil-gesteuert. Die Steuerleitungen zur Zuführung des Steuerfluids sind in den Figuren nicht erkennbar. Sie führen zum ersten Steuerraum 72 und zum zweiten Steuerraum 73 und beaufschlagen die erste und die zweite Steuerfläche 23, 24 mit je einem Steuerdruck.

Je nach Ausführungsform sind zwei Pilotventile vorhanden und beide Steuerdrücke werden variiert, um das Ventil zu öffnen und zu schliessen. Alternativ kann einer der zwei Steuerdrücke permanent und vorzugsweise zeitlich konstant sein und lediglich der andere Steuerdruck wird variiert. Der permanente Steuerdruck wirkt dabei wie eine Luftfeder. Hierzu genügt ein einziges Pilotventil. Diese Variante ist in der noch unveröffentlichten EP 21 171 205.4 der Anmelderin beschrieben. Vorzugsweise wird die zweite Steuerfläche 24 mit einem permanenten und vorzugsweise zeitlich konstanten Druck beaufschlagt.

Als Prozessfluid und Steuerfluid wird vorzugsweise Druckluft verwendet. Der Prozessdruck beträgt üblicherweise circa 40 bar Der Steuerdruck beträgt üblicherweise 5 bar bis 10 bar, abhängig davon, ob er permanent oder nur alternativ zum anderen Steuerdruck verwendet wird.

Erfindungsgemäss weist die freie Stirnfläche 20 eine Erhebung 204 auf. Diese Erhebung 204 befindet sich vorzugsweise mittig zur Längsmittelachse L. Sie überragt den restlichen Bereich der freien Stirnfläche 20, insbesondere den durch die Dichtungskrone 21 gebildeten umlaufenden Dichtungsbereich 21. Vorzugsweise ist der Bereich zwischen der Erhebung 204 und dem umlaufenden Dichtungsbereich 21, hier der Dichtungskrone, vertieft angeordnet. Dieser Bereich wird hier äusserer Stirnflächenbereich 201 genannt. Er ist vorzugsweise plan ausgebildet und erstreckt sich senkrecht zur Längsmittelachse L des Kolbens 2.

Die Erhebung 204 ist vorzugsweise kegelstumpfförmig ausgebildet, so dass ihr freies Ende einen inneren Stirnflächenbereich 203 bildet. Dieser ist vorzugsweise plan ausgebildet und erstreckt sich ebenfalls vorzugsweise senkrecht zur Längsmittelachse L. Der innere Stirnflächenbereich 203 weist die gemeinsame Einlassöffnung 250 der Verbindungskanäle 25 auf. Diese ist vorzugsweise zentrisch zur Längsmittelachse L des Kolbens angeordnet.

Die Erhebung 204 weist einen umlaufenden Mantel 202 auf. Er ist je nach Ausführungsform geradlinig ausgebildet. Vorzugsweise ist er jedoch, wie hier dargestellt, leicht nach innen gebogen, d.h. konkav, ausgebildet.

Beim Öffnen des Ventils fliesst das Prozessfluid von der Prozessfluid-Eingangsöffnung 90 entlang des Dichtungsbereichs 21, hier entlang der Dichtungskrone, zur Prozessfluid-Ausgangsöffnung 91. Der Bernoulli-Effekt in der Region des Dichtungsbereichs 21 und eventuell auch im Bereich des äusseren Stirnflächenbereichs 201 führt während des Öffnens des Ventils zu einer Kraft in Schliessrichtung des Kolbens 2. Das Prozessgas wird jedoch aufgrund der Erhebung 204 an deren Mantel 202 umgelenkt. Die mindestens eine Verbindungsleitung 25 sowie der Kompensationsraum 71 führen zu einem Unterdruck im Bereich des inneren Stirnflächenbereichs 203 und somit zu einer Kraft in Öffnungsrichtung des Kolbens 2. Der Bernoulli-Effekt lässt sich dadurch kompensieren und das Ventil lässt sich schnell und zeitlich präzise öffnen.

In den Figuren 3 und 4 ist ein zweites Ausführungsbeispiel des erfindungsgemässen Ventils dargestellt. Gleiche Teile sind mit denselben Bezugsziffern versehen wie im ersten Ausführungsbeispiel. Sie werden deshalb nicht nochmals erläutert. In diesem Beispiel ist ein einziger Verbindungskanal 25 vorhanden, der zentrisch entlang der Längsmittelachse L des Kolbens 2 verläuft. Alternativ lassen sich mehrere parallel zur Längsmittelachse L verlaufende Verbindungskanäle 25 einsetzen. Der Kompensationsraum 71 befindet sich somit zwischen der obersten Stirnfläche des Kolbens 2 und dem ersten Gehäuseteil 10. Die oberste Stirnfläche bildet in diesem Beispiel somit die Kompensationsfläche 22. Der kreiszylinderförmige Raum zwischen der obersten Stirnfläche und dem ersten Gehäuseteil 10 bildet den Kompensationsraum 71.

Vorzugsweise weist der Kolben 2 in der zweiten Stirnfläche eine Vertiefung auf, in die ein Einsatz in Form eines Dämpfungselements 8 eingelegt ist. Dieses dämpft beim Öffnen den Anschlag des Kolbens 2 an das erste Gehäuseteil 10. Das Dämpfungselement 8 ist vorzugsweise aus einem weichen und/oder elastischen Material gefertigt. Es weist passend zum Verbindungskanal 25 eine Durchgangsöffnung 80 auf.

Der zweite Steuerraum 73 und die zweite Steuerfläche 24 befinden sich in diesem Beispiel in der Ringstruktur des Zylinderabschnitts mit dem grössten Umfang. Sie sind somit ringförmig ausgebildet.

Die Steuerung erfolgt wiederum mittels zweier Pilotventile mit unterschiedlichen variierten Drücken oder mit einem einzigen Pilotventil für einen variablen Druck im ersten Steuerraum und einem permanenten Druck und vorzugsweise ohne weiteres Pilotventil im zweiten Steuerraum.

Die freie Stirnfläche 20 des Kolbens 2 ist gleich ausgebildet wie im ersten Ausführungsbeispiel. Die Wirkungsweise ist dieselbe wie oben beschrieben.

Die Prozessfluid-Eingangsöffnung 90 ist in diesen Schnittdarstellungen nicht als Öffnung erkennbar. Ihre Lage ist jedoch mit dem Bezugszeichen 90 versehen. Sie kann auch an einer anderen Stelle, insbesondere diagonal gegenüberliegend angeordnet sein.

Der Prozessfluid-Ausgangskanal 910 verläuft in diesem Ausführungsbeispiel in einem Winkel ungleich 0° zur Längsmittelachse L. Er kann jedoch auch parallel dazu verlaufen. Ebenso kann der Prozessfluid-Ausgangskanal 910 des ersten Ausführungsbeispiels schräg zur Längsmittelachse L verlaufen.

Die zwei Ventile sind lediglich beispielhaft, um die Wirkungsweise der erfindungsgemässen Erhebung in Kombination mit dem Verbindungskanal und dem Kompensationsraum zu zeigen. Beispiele von Variationen, die den Erfindungsgedanken verwirklichen, sind wie folgt:
Die freie Stirnfläche lässt sich in beiden Ausführungsbeispielen anders ausführen. Die Erhebung 204 ist vorzugsweise mittig angeordnet, sie kann jedoch auch dezentral angeordnet sein. Vorzugsweise ist sie rotationssymmetrisch ausgebildet. Sie kann jedoch auch anders geformt sein, beispielsweise kann sie schräg bezüglich der Längsmittelachse L verlaufen.
Die Einlassöffnung 250 des Verbindungskanals 25 befindet sich vorzugsweise im höchsten Punkt der Erhebung. Sie kann jedoch auch im Mantel 202 oder sogar benachbart zur Erhebung 204 im äusseren Stirnflächenflächenbereich 201 angeordnet sein.
Der äussere Stirnflächenflächenbereich 201 verläuft vorzugsweise plan und senkrecht zur Längsmittelachse L des Kolbens 2. Er kann jedoch auch schräg oder gebogen ausgebildet sein.
Der Dichtungsbereich 21 weist vorzugsweise die Form einer Dichtungskrone 21 mit spitz zulaufender Dichtkante auf. Er kann auch anders ausgebildet sein, beispielsweise plan und fluchtend mit dem äusseren Stirnflächenbereich 201.
Eine Führungsschürze 3 und ein Niederhalter 4 sind bevorzugt, jedoch nicht zwingend. Der Kolben 2 und die Sitzdichtung 5 können auf andere Art und Weise in der Kolbenaufnahme geführt bzw. gehalten sein.
Die Prozessfluid-Eingangsöffnung 90 und die Prozessfluid-Ausgangsöffnung 91 lassen sich auch in einem anderen Winkel zueinander und zur Längsmittelachse L des Kolbens 2 anordnen.
Des Weiteren kann der Kolben 2 drehbar oder rotationsfest in der Kolbenaufnahme angeordnet sein.
Die zwei dargestellten Ventile sind aufgrund ihrer Ausbildung des Kolbens 2, der Ausbildung der Steuerflächen 23, 24, der Schürze 3 und des Niederhalters 4 einfach herzustellen, zu montieren und auszuwechseln. Das Ventil lässt sich jedoch auch anders ausbilden. Beispielsweise lassen sich Grundformen bekannter Ventile mit der erfindungsgemässen Erhebung 204 in der prozessfluid-zugewandten Stirnfläche 20 versehen.

Das erfindungsgemässe Ventil ermöglicht ein schnelles und zeitpräzises Öffnen.

### BEZUGSZEICHENLISTE

| | | | |
|---|---|---|---|
| 10 | erstes Gehäuseteil | 60 | dynamische Dichtung |
| 11 | zweites Gehäuseteil | 61 | erster Dichtungsring |
| | | 62 | zweiter Dichtungsring |
| 2 | Kolben | 63 | dritter Dichtungsring |
| 20 | freie Stirnfläche | 64 | vierter Dichtungsring |
| 201 | äusserer Stirnflächenbereich | | |
| 202 | Mantel | 70 | Prozessfluidbereich |
| 203 | innerer Stirnflächenbereich | 71 | Kompensationsraum |
| 204 | Erhebung | 72 | erster Steuerraum |
| 21 | Dichtungsbereich | 73 | zweiter Steuerraum |
| 22 | Kompensationsfläche | | |
| 23 | erste Steuerfläche | 8 | Dämpfungselement |
| 24 | zweite Steuerfläche | 80 | Durchgangsöffnung |
| 25 | Verbindungskanal | | |
| 250 | Einlassöffnung | 90 | Prozessfluid- |
| 26 | Bohrung | 91 | Eingangsöffnung Prozessfluid- |
| 3 | Führungsschürze | 910 | Ausgangsöffnung Prozessfluid-Ausgangskanal |
| 4 | Niederhalter | L | Längsmittelachse |
| 5 | Sitzdichtung | | |

## Patentansprüche

1. Ventil mit einem bewegbaren Kolben (2), einem Prozessfluidbereich (70) und einem Kompensationsraum (71),
wobei der Kolben (2) eine dem Prozessfluidbereich (70) zugewandte freie Stirnfläche (20) aufweist mit einem umlaufenden äusseren Dichtungsbereich (21) und
wobei der Kolben (2) mindestens einen Verbindungskanal (25) aufweist, der den Prozessfluidbereich (70) mit dem Kompensationsraum (71) verbindet,
**dadurch gekennzeichnet,**
**dass** die freie Stirnfläche (20) des Kolbens (2) eine Erhöhung (204) aufweist, die vom äusseren Dichtungsbereich (21) umgeben ist und
**dass** die Erhöhung (204) den umlaufenden äusseren Dichtungsbereich (21) überragt.

2. Ventil nach Anspruch 1, wobei der mindestens eine Verbindungskanal (25) die Erhöhung (204) durchsetzt.

3. Ventil nach einem der Ansprüche 1 oder 2, wobei der äussere umlaufende Dichtungsbereich (21) eine Dichtungskrone bildet.

4. Ventil nach einem der Ansprüche 1 bis 3, wobei die Erhöhung (204) mittig im äusseren umlaufenden Dichtungsbereich (21) angeordnet ist.

5. Ventil nach einem der Ansprüche 1 bis 4, wobei die Erhöhung (204) kegelstumpfförmig ausgebildet ist, wobei die Erhöhung (204) vorzugsweise einen nach innen gebogenen umlaufenden Mantel (202) aufweist.

6. Ventil nach einem der Ansprüche 1 bis 5, wobei der mindestens eine Verbindungskanal (25) eine Einlassöffnung (250) aufweist, die mittig in der Erhöhung (204) angeordnet ist.

7. Ventil nach einem der Ansprüche 1 bis 6, wobei der Kolben (2) mittels eines ersten Steuerdrucks und eines zweiten Steuerdrucks betätigbar ist und wobei der Kolben (2) eine erste Steuerfläche (23) zur Beaufschlagung mit dem ersten Steuerdruck und eine zweite Steuerfläche (24) zur Beaufschlagung mit dem zweiten Steuerdruck aufweist.

8. Ventil nach einem der Ansprüche 1 bis 7, wobei der Kolben (2) druckausgeglichen ist.

9. Ventil nach einem der Ansprüche 1 bis 8, wobei das Ventil eine Prozessfluid-Eingangsöffnung (90) aufweist, die in den Prozessfluidbereich (70) hineinführt, und eine Prozessfluid-Ausgangsöffnung (91) aufweist, die aus dem Prozessfluidbereich (70) hinausführt, und wobei die Prozessfluid-Eingangsöffnung (90) und die Prozessfluid-Ausgangsöffnung (91) annähernd in einem rechten Winkel zueinander angeordnet sind.

10. Ventil nach Anspruch 9, wobei die Prozessfluid-Eingangsöffnung (90) annähernd parallel zu einer Längsachse des Kolbens (2) angeordnet ist und die Prozessfluid-Ausgangsöffnung (91) annähernd senkrecht zur Längsachse des Kolbens (2) angeordnet ist.

11. Ventil nach einem der Ansprüche 1 bis 10, wobei der Kolben (2) eine Längsmittelachse (L) definiert.

12. Ventil nach Anspruch 11, wobei die Längsmittelachse (L) im mindestens einen Verbindungskanal (25) verläuft.

13. Ventil nach Anspruch 11, wobei mindestens zwei Verbindungskanäle (25) vorhanden sind und wobei die mindestens zwei Verbindungskanäle (25) in einem Winkel ungleich 0° zur Längsmittelachse (L) verlaufen.

14. Ventil nach einem der Ansprüche 11 bis 13, wobei die freie Stirnfläche (20) zwischen der Erhebung (204) und dem umlaufenden Dichtungsbereich (21) eine umlaufende Fläche (201) aufweist, die senkrecht zur Längsmittelachse (L) verläuft, wobei die Fläche (201) vorzugsweise plan ausgebildet ist.

15. Ventil nach einem der Ansprüche 11 bis 14, wobei eine dem Dichtungsbereich (21) gegenüberliegende Sitzdichtung (5) plan ausgebildet ist und senkrecht zur Längsmittelachse (L) des Kolbens (2) verläuft.
